# EUROPEAN PATENT APPLICATION

(11) **EP 4 556 352 A1**
(43) Date of publication of application: **21.05.2025**
(21) Application number: 23939210.3
(22) Date of filing: 26.09.2023
(51) Int. Cl.: B62D 23/00, B62D 25/00, B62D 25/02, B62D 25/08, B62D 25/16

(54) **VEHICLE BODY STRUCTURE AND MANUFACTURING METHOD THEREFOR, AND VEHICLE**

(30) Priority: 31.05.2023 CN 202310632981
(71) Applicant: Deepal Automobile Technology Co., Ltd., Chongqing 401133 (CN)
(72) Inventor: YANG, Zhong, Chongqing 401135 (CN); YANG, Zhoulin, Chongqing 401135 (CN); LIAO, Shuiping, Chongqing 401135 (CN); XU, Zhian, Chongqing 401135 (CN); PENG, Daishun, Chongqing 401135 (CN)
(74) Representative: 2K Patentanwälte Blasberg Kewitz & Reichel
(86) International application number: PCT/CN2023/121343
(87) International publication number: WO 2024/244236

(57) **Abstract**

A vehicle body structure, a manufacturing method, and a vehicle. The method comprises: assembling blanking sheets of left and right body side inner panels (4000L, 4000R), left and right body side outer panel reinforcing panels (5000L, 5000R), a cabin framework (1000), left and right front wheel covers (2000L, 2000R), a front panel (3000), a rear floor framework (6000) and left and right rear wheel covers (7000L, 7000R) into an integrated panel body, then performing hot-stamping forming, and finally performing connection to form a vehicle body structure. Therefore, the matching quality problem caused by part size errors is avoided, the collision performance difference caused by multi-part state consistency difference is avoided, and the number of welding spots is reduced, thereby reducing the failure probability of welding spots, improving the collision stability, and improving the vehicle safety.

## Description

### TECHNICAL FIELD

The present invention relates to the field of vehicle body structure technologies, and in particular, to a vehicle body structure and a manufacturing method therefor, and a vehicle.

### BACKGROUND

In recent years, with the rapid development of electric vehicles, to increase an endurance mileage, the electric vehicles need to be equipped with more and larger battery packs. Therefore, compared with a fuel vehicle of a same specification, a weight of an entire electric vehicle increases significantly. This leads to an increase in kinetic energy of the entire vehicle at the beginning of a collision under the same test condition. In other words, a vehicle body structure of the electric vehicle needs to be capable of withstanding a larger force and absorbing more kinetic energy to improve safety. Further, in an intelligent electric vehicle, arrangement of a battery pack and an intelligent electronic apparatus requires a large amount of space. Various classic vehicle body collision safety structures of a conventional fuel vehicle are not applicable. Therefore, it is imperative to design a new vehicle body structure that can satisfy the arrangement of the battery pack and the intelligent electronic apparatus and ensure vehicle safety. Moreover, as consumers' values on vehicle products change, rapid updating of vehicle products has become a trend of vehicle development. Therefore, high performance, high precision, short cycles, low costs, and lightweight are the key bottleneck issues that automakers urgently need to address. To address the foregoing issues, high integration of vehicles is an inevitable trend in the future development of electric vehicles.

In general, a conventional vehicle body is made up of hundreds of parts that are welded through a plurality of processes. Individual parts are welded to form subassemblies. Subassemblies are welded to form assemblies, that is, to form several major assemblies such as a front engine compartment welding assembly, a front floor welding assembly, a rear floor welding assembly, a side wall welding assembly, and a top cover welding assembly. Finally, these several major assemblies are combined on a main line to form a vehicle body-in-white assembly. In a production process, additional reinforcing panels further need to be arranged on individual parts, resulting in a quantity of more than 500 individual parts. In addition, thousands of dies and hundreds of fixtures are required for welding through more than 6,000 solder joints. Separate molding and welding of individual parts lead to a large quantity of processes and high man-hour costs. There are problems such as a huge quantity of parts, a complex manufacturing process, a complex overlapping and matching relationship between parts, an excessively long dimension chain, and discontinuous key attachment point structures. In addition, due to the use of spot welding connections, an overlap surface for overlapping needs to be reserved between individual parts inside an assembly, and an overlapping region occupies a large area, thereby increasing a quantity of materials to be used and a weight of a product. These problems seriously restrict the development of vehicle body-in-white toward high performance, high precision, lightweight, short cycles, and low costs.

### SUMMARY

A first objective of the present invention is to provide a vehicle body structure, so as to resolve a problem in a conventional technology that the vehicle body structure integrates an excessively large quantity of parts. A second objective of the present invention is to provide a manufacturing method for a vehicle body structure. A third objective of the present invention is to provide a vehicle.

To achieve the foregoing objectives, the following technical solutions are used in the present invention.

According to a first aspect, a vehicle body structure is provided. The vehicle body structure is characterized by including:
a left-right side wall inner panel, including a left side wall inner panel and a right side wall inner panel that are integrally molded through hot stamping of an integral sheet material, where the left side wall inner panel and the right side wall inner panel are symmetrically and respectively disposed on two sides;
a left-right side wall outer panel reinforcing panel, including a left side wall outer panel reinforcing panel and a right side wall outer panel reinforcing panel that are integrally molded through hot stamping of an integral sheet material, where the left side wall outer panel reinforcing panel and the right side wall outer panel reinforcing panel are symmetrically and respectively disposed on two sides, the left side wall outer panel reinforcing panel is disposed on an outer side of the left side wall inner panel, and the right side wall outer panel reinforcing panel is disposed on an outer side of the right side wall inner panel;
an engine compartment framework, disposed between the left side wall inner panel and the right side wall inner panel, and located in a front section of the left-right side wall inner panel, where the engine compartment framework includes a left front longitudinal beam section of the engine compartment framework, a right front longitudinal beam section of the engine compartment framework, and a rear section of the engine compartment framework that are combined and integrally molded through hot stamping of an integral sheet material;
a left-right front wheel cover, including a left front wheel cover and a right front wheel cover that are integrally molded through hot stamping of an integral sheet material, where the left front wheel cover and the right front wheel cover are respectively disposed on two sides of the engine compartment framework;
a front wall panel, integrally molded through hot stamping of an integral sheet material, disposed in the rear section of the engine compartment framework, and located between the left side wall inner panel and the right side wall inner panel;
a rear floor framework, where the rear floor framework is integrally molded through hot stamping of an integral sheet material, disposed between the left side wall inner panel and the right side wall inner panel, and located in a rear section of the left-right side wall inner panel; and
a left-right rear wheel cover, including a left rear wheel cover and a right rear wheel cover that are integrally molded through hot stamping of an integral sheet material, where the left rear wheel cover and the right rear wheel cover are respectively disposed on two sides of the rear floor framework.

Based on the first aspect, in some implementations, each of the left side wall inner panel and the right side wall inner panel is formed through hot stamping of an integrated sheet having two closed door rings; and each of the left side wall inner panel and the right side wall inner panel includes:
an inner panel A-pillar portion, including an inner panel A-pillar upper end portion and an inner panel A-pillar lower end portion;
an inner panel B-pillar portion, including an inner panel B-pillar upper end portion and an inner panel B-pillar lower end portion;
an inner panel C-pillar portion, including an inner panel C-pillar upper end portion and an inner panel C-pillar lower end portion;
an inner panel doorsill portion, located between the inner panel A-pillar lower end portion and the inner panel C-pillar lower end portion, where the inner panel B-pillar lower end portion is connected to a middle of the inner panel doorsill portion;
a first inner panel upper side beam portion, located between the inner panel B-pillar upper end portion and the inner panel A-pillar upper end portion; and
a second inner panel upper side beam portion, located between the inner panel B-pillar upper end portion and the inner panel C-pillar upper end portion, where
the inner panel A-pillar portion, the first inner panel upper side beam portion, the inner panel B-pillar portion, and the inner panel doorsill portion form a first inner closed door ring, and the inner panel C-pillar portion, the second inner panel upper side beam portion, the inner panel B-pillar portion, and the inner panel doorsill portion form a second inner closed door ring.

Based on the first aspect, in some implementations, an inner panel B-pillar patch panel is disposed in an upper portion of the inner panel B-pillar portion, and the inner panel B-pillar patch panel is integrally molded with the integrated sheet through hot stamping.

Based on the first aspect, in some implementations, each of the left side wall outer panel reinforcing panel and the right side wall outer panel reinforcing panel is formed through hot stamping of an integrated sheet having two closed door rings; and each of the left side wall outer panel reinforcing panel and the right side wall outer panel reinforcing panel includes:
an outer panel A-pillar portion, including an outer panel A-pillar upper end portion and an outer panel A-pillar lower end portion;
an outer panel B-pillar portion, including an outer panel B-pillar upper end portion and an outer panel B-pillar lower end portion;
an outer panel C-pillar portion, including an outer panel C-pillar upper end portion and an outer panel C-pillar lower end portion;
an outer panel doorsill portion, located between the outer panel A-pillar lower end portion and the outer panel C-pillar lower end portion, where the outer panel B-pillar lower end portion is connected to a middle of the outer panel doorsill portion;
a first outer panel upper side beam portion, located between the outer panel B-pillar upper end portion and the outer panel A-pillar upper end portion; and
a second outer panel upper side beam portion, located between the outer panel B-pillar upper end portion and the outer panel C-pillar upper end portion, where
the outer panel A-pillar portion, the first outer panel upper side beam portion, the outer panel B-pillar portion, and the outer panel doorsill portion form a first outer closed door ring, and the outer panel C-pillar portion, the second outer panel upper side beam portion, the outer panel B-pillar portion, and the outer panel doorsill portion form a second outer closed door ring.

Based on the first aspect, in some implementations, each of the left side wall outer panel reinforcing panel and the right side wall outer panel reinforcing panel further includes an outer panel A-pillar upper patch panel and an outer panel A-pillar lower patch panel; the outer panel A-pillar upper patch panel starts from the outer panel A-pillar upper end portion and extends along the first outer panel upper side beam portion to the outer panel B-pillar upper end portion, and the outer panel A-pillar upper patch panel is integrally molded with the integrated sheet through hot stamping; the outer panel A-pillar lower patch panel is disposed in the outer panel A-pillar portion and located between the outer panel A-pillar upper end portion and the outer panel A-pillar lower end portion, and the outer panel A-pillar lower patch panel is integrally molded with the integrated sheet through hot stamping.

Based on the first aspect, in some implementations, a flange connection surface is disposed on each of outer edges of the left side wall outer panel reinforcing panel and the right side wall outer panel reinforcing panel, and inner edges of the first outer closed door ring and the second outer closed door ring; a flange connection surface is disposed on each of outer edges of the left side wall inner panel and the right side wall inner panel, and inner edges of the first inner closed door ring and the second inner closed door ring; the left side wall outer panel reinforcing panel is connected to the left side wall inner panel through the flange connection surface, and the right side wall outer panel reinforcing panel is connected to the right side wall inner panel through the flange connection surface.

Based on the first aspect, in some implementations, each of cross sections of the left front longitudinal beam section of the engine compartment framework and the right front longitudinal beam section of the engine compartment framework is of an upwardly open "U"-shaped force transmission structure.

Based on the first aspect, in some implementations, a front longitudinal beam sealing panel is disposed at each of the upward openings of the left front longitudinal beam section of the engine compartment framework and the right front longitudinal beam section of the engine compartment framework.

Based on the first aspect, in some implementations, the engine compartment framework further includes a first engine compartment patch panel and a second engine compartment patch panel, and the first engine compartment patch panel and the second engine compartment patch panel are disposed in the rear section of the engine compartment framework and integrally molded with the integral sheet material through stamping.

Based on the first aspect, in some implementations, the front wall panel includes a front wall panel upper panel portion, a front wall panel lower panel portion, and a reinforcing beam portion located between the front wall panel upper panel portion and the front wall panel lower panel portion, and a cavity with a triangular cross section is formed between a footrest position of the front wall panel lower panel portion and the rear section of the engine compartment framework.

Based on the first aspect, in some implementations, the front wall panel further includes a first front wall patch panel and a second front wall patch panel, the first front wall patch panel is disposed in a left part of the front wall panel upper panel portion and overlaps downward with the reinforcing beam portion, the second front wall patch panel is disposed in a middle of the front wall panel lower panel portion and overlaps upward with the reinforcing beam portion, and the first front wall patch panel and the second front wall patch panel are integrally molded with an integral sheet material of the front wall panel through hot stamping.

Based on the first aspect, in some implementations, the rear floor framework includes a left side beam portion, a right side beam portion, and a front transverse beam portion, a middle transverse beam portion, and a rear transverse beam portion that are located between the left side beam portion and the right side beam portion, where the front transverse beam portion is closed and connected to front ends of the left side beam portion and the right side beam portion, the rear transverse beam portion is disposed close to rear ends of the left side beam portion and the right side beam portion, and the middle transverse beam portion is located between the front transverse beam portion and the rear transverse beam portion.

Based on the first aspect, in some implementations, each of the left rear wheel cover and the right rear wheel cover includes a rear wheel cover outer panel and a rear wheel cover inner panel, a first overlap edge and a second overlap edge for connection to the left-right side wall inner panel are disposed in a front portion of the rear wheel cover inner panel, a third overlap edge that overlaps with a D-pillar is disposed on an upper edge of the rear wheel cover inner panel, a fourth overlap edge that overlaps with the rear wheel cover outer panel is disposed in a rear portion of the rear wheel cover inner panel, and a fifth overlap edge that overlaps with the rear floor framework is disposed in a lower portion of the rear wheel cover inner panel.

Based on the first aspect, in some implementations, a flange is correspondingly disposed in each of an outer panel C-pillar portion of the left-right side wall outer panel reinforcing panel and an inner panel C-pillar portion of the left-right side wall inner panel, the flange of the inner panel C-pillar portion overlaps with the first overlap edge of the rear wheel cover inner panel and the rear wheel cover outer panel, the flange of the outer panel C-pillar portion overlaps with a panel surface of the rear wheel cover outer panel, and a cavity structure with a closed cross section is formed in the outer panel C-pillar portion and the inner panel C-pillar portion.

Based on the first aspect, in some implementations, each of the left front wheel cover and the right front wheel cover includes a shock absorber mounting portion, a wheel cover portion, a wheel cover rear reinforcing portion, a wheel cover front reinforcing portion, a first front wheel cover patch panel, and a second front wheel cover patch panel; the first front wheel cover patch panel is attached to inner sides of the shock absorber mounting portion and the wheel cover portion, and the second front wheel cover patch panel is attached to the inner side of the wheel cover portion.

According to a second aspect, a manufacturing method for a vehicle body structure is provided. The method is characterized by including the following steps:
S1. mounting a corresponding patch panel on each of integral sheet materials of a left side wall inner panel, a right side wall inner panel, a left side wall outer panel reinforcing panel, a right side wall outer panel reinforcing panel, an engine compartment framework, a left front wheel cover, a right front wheel cover, a front wall panel, a rear floor framework, a left rear wheel cover, and a right rear wheel cover;
S2. performing hot stamping on the sheet materials mounted with the patch panels to respectively form an integrated left side wall inner panel, right side wall inner panel, left side wall outer panel reinforcing panel, right side wall outer panel reinforcing panel, engine compartment framework, left front wheel cover, right front wheel cover, front wall panel, rear floor framework, left rear wheel cover, and right rear wheel cover; and
S3. connecting the left side wall inner panel to the left side wall outer panel reinforcing panel to form a left side wall assembly; connecting the right side wall inner panel to the right side wall outer panel reinforcing panel to form a right side wall assembly; connecting the engine compartment framework to a left front wheel, a right front wheel, and the front wall panel to form an engine compartment assembly; connecting the rear floor framework to the left rear wheel cover and the right rear wheel cover to form a rear floor assembly; and then connecting the front engine compartment assembly to the left side wall assembly, the right side wall assembly, and the rear floor assembly to form the vehicle body structure.

According to a third aspect, a vehicle is provided. The vehicle is characterized by including the vehicle body structure according to any implementation of the first aspect.

Beneficial effects of the present invention: According to the solution of the present invention, each individual part of a vehicle body structure is integrated into an integral sheet material, then hot stamping is performed on the integral sheet material to form an integrated part, and finally various integrated parts are welded to form a highly integrated vehicle body structure. Conventional welding of a plurality of parts through a plurality of processes and a plurality of solder joints is replaced with simple welding of several integrally molded hot-stamped parts. This avoids a matching quality problem caused by a part size error, avoids collision performance difference caused by a status consistency difference of a plurality of parts, and reduces a quantity of solder joints, thereby reducing a probability of solder joint failure, and further improving collision stability and improving overall vehicle safety.

### BRIEF DESCRIPTION OF DRAWINGS

FIG. 1 is a schematic diagram of a part layout of a vehicle body structure according to an example embodiment of the present invention;
FIG. 2 is a three-dimensional diagram of a vehicle body structure according to an example embodiment of the present invention;
FIG. 3 is a schematic structural diagram of an engine compartment framework;
FIG. 4 is a cross-sectional view of F-F in FIG. 3;
FIG. 5 is a schematic structural diagram of a left-right front wheel cover;
FIG. 6 is a rear view of FIG. 5;
FIG. 7 is a schematic structural diagram of a front wall panel;
FIG. 8 is a schematic diagram of assembling an engine compartment framework with a left-right front wheel cover and a front wall panel;
FIG. 9 is a cross-sectional view of H-H in FIG. 8;
FIG. 10 is a schematic structural diagram of a left-right side wall inner panel;
FIG. 11 is a cross-sectional view of G-G in FIG. 10;
FIG. 12 is a schematic structural diagram of a left-right side wall outer panel reinforcing panel;
FIG. 13 is a rear view of FIG. 12;
FIG. 14 is a three-dimensional diagram of a left-right side wall outer panel reinforcing panel;
FIG. 15 is a cross-sectional view of A-A in FIG. 13;
FIG. 16 is a cross-sectional view of B-B in FIG. 13;
FIG. 17 is a cross-sectional view of C-C in FIG. 13;
FIG. 18 is a schematic structural diagram of a through rib;
FIG. 19 is a cross-sectional view of D-D in FIG. 13;
FIG. 20 is a cross-sectional view of E-E in FIG. 13;
FIG. 21 is a schematic diagram of a left-right side wall outer panel reinforcing panel with a front finger beam, a rear wheel cover, and a door anti-collision beam;
FIG. 22 is a cross-sectional view of I-I in FIG. 21;
FIG. 23 is a schematic structural diagram of a rear floor framework;
FIG. 24 is a schematic structural diagram of a rear wheel cover inner panel;
FIG. 25 is a partially enlarged view of an upper part of FIG. 24;
FIG. 26 is a process flowchart of a manufacturing method for a vehicle body structure according to an example embodiment of the present invention; and
FIG. 27 is a schematic diagram of force relief of a vehicle body structure according to the present invention.

In the figures, 1000-engine compartment framework, 1001-rear section of the engine compartment framework, 1002-left front longitudinal beam section of the engine compartment framework, 1003-right front longitudinal beam section of the engine compartment framework, 1004-front longitudinal beam sealing panel, 1005-first engine compartment patch panel, 1006-second engine compartment patch panel, 2000L-left front wheel cover, 2000R-right front wheel cover, 2110-shock absorber mounting portion, 2120-wheel cover portion, 2121-first reinforcing rib, 2122-second reinforcing rib, 2123-third reinforcing rib, 2130-wheel cover rear reinforcing portion, 2140-wheel cover front reinforcing portion, 2141-fourth reinforcing rib, 2200-first front wheel cover patch panel, 2300-second front wheel cover patch panel, 3000-front wall panel, 3100-front wall panel upper panel portion, 3200-front wall panel lower panel portion, 3210-middle channel reinforcing rib, 3300-reinforcing beam portion, 3310-front wall panel middle reinforcing beam, 3320-front wall panel left reinforcing beam, 3330-front wall panel right reinforcing beam, 3400-first front wall patch panel, 3500-second front wall patch panel, 4000L-left side wall inner panel, 4000R-right side wall inner panel, 4100-first inner panel upper side beam portion, 4200-inner panel A-pillar portion, 4300-inner panel B-pillar portion, 4400-second inner panel upper side beam portion, 4500-inner panel C-pillar portion, 4600-inner panel doorsill portion, 4210-first inner panel reinforcing rib, 4220-second inner panel reinforcing rib, 4310-inner panel B-pillar patch panel, 4510-third inner panel reinforcing rib, 4520-flange, 4610-fourth inner panel reinforcing rib, 5000L-left side wall outer panel reinforcing panel, 5000R-right side wall outer panel reinforcing panel, 5100-outer panel A-pillar portion, 5200-first outer panel upper side beam portion, 5300-outer panel B-pillar portion, 5400-second outer panel upper side beam portion, 5500-outer panel C-pillar portion, 5600-outer panel doorsill portion, 5017-outer panel A-pillar lower patch panel, 5016-outer panel A-pillar upper patch panel, 5900-door anti-collision beam, 5910-front finger beam, 5007-beveled surface, 5008-first corner, 5009-second corner, 5010-third corner, 5011-fourth corner, 5012-secondary stepped surface, 5013-flange, 5014-flange connection surface, 5015-through rib, 6000-rear floor framework, 6100-left side beam, 6101-left side beam front section, 6102-first left transition region, 6103-middle transverse beam left connection section, 6104-second left transition region, 6105-left side beam middle section, 6106-third left transition region, 6107-rear transverse beam left connection section, 6108-fourth left transition region, 6109-left side beam rear section, 6200-right side beam, 6201-right side beam front section, 6202-first right transition region, 6203-middle transverse beam right connection section, 6204-second right transition region, 6205-right side beam middle section, 6206-third right transition region, 6207-rear transverse beam right connection section, 6208-fourth right transition region, 6209-right side beam rear section, 6300-front transverse beam, 6400-middle transverse beam, 6500-rear transverse beam, 6001-left front welding seam, 6002-right front welding seam, 6003-left middle welding seam, 6004-right middle welding seam, 6005-left rear welding seam, 6006-right rear welding seam, 7000L-left rear wheel cover, 7000R-right rear wheel cover, 7100-rear wheel cover inner panel, 7200-rear wheel cover patch panel, 7300-rear wheel cover outer panel, 7101-rear wheel cover rear reinforcing rib, 7102-rear wheel cover front reinforcing rib, 7103-first overlap edge, 7104-second overlap edge, 7105-third overlap edge, 7106-fourth overlap edge, 7107-fifth overlap edge, 7201-patch panel upper connection edge, 7202-patch panel first connection part, 7203-patch panel second connection part.

### DESCRIPTION OF EMBODIMENTS

The following describes implementations of the present invention with reference to accompanying drawings and preferred embodiments. A person skilled in the art can easily understand other advantages and effects of the present invention based on content disclosed in this specification. The present invention may be further implemented or applied by using other different specific implementations. Various details in this specification may also be modified or altered based on different viewpoints and applications without departing from the essence of the present invention. It should be understood that the preferred embodiments are merely intended to describe the present invention, and are not intended to limit the protection scope of the present invention.

It should be noted that the figures provided in the following embodiments merely schematically describe the basic concept of the present invention. Therefore, the figures display only components related to the present invention instead of being drawn based on a quantity, shapes, and sizes of components in actual implementation. Forms, the quantity, and a ratio of the components in actual implementation of the figures may be randomly changed, and a component layout form of the figures may also be more complex.

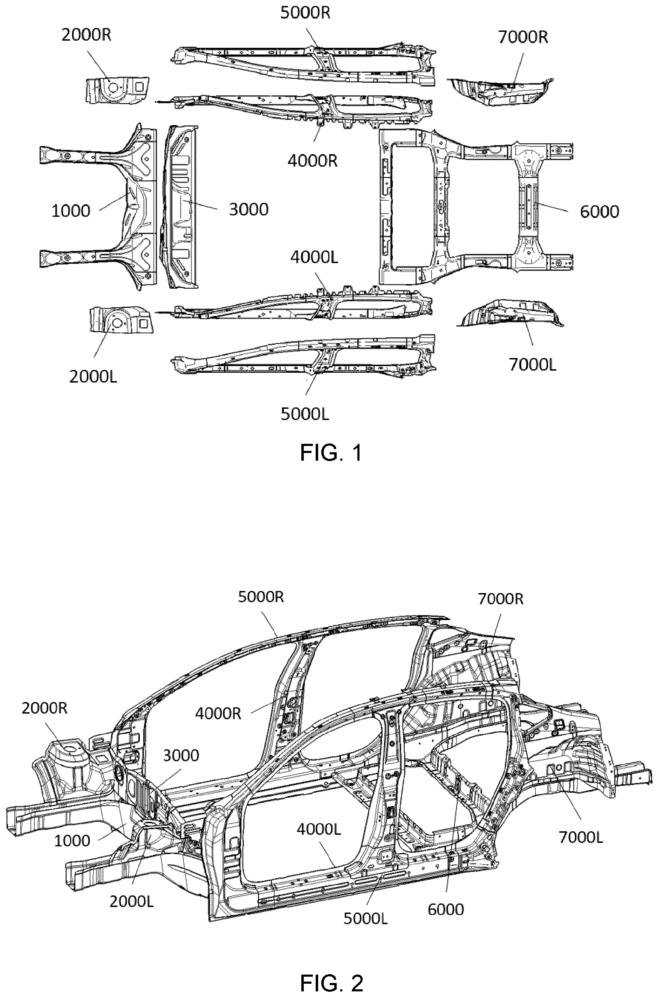

FIG. 1 is a schematic structural diagram of a vehicle body structure according to an example embodiment of the present invention. FIG. 2 is a three-dimensional diagram of a vehicle body structure according to an example embodiment of the present invention.

Referring to FIG. 1 and FIG. 2, this example embodiment provides a vehicle body structure, which includes a left-right side wall inner panel, a left-right side wall outer panel reinforcing panel, an engine compartment framework 1000, a left-right front wheel cover, a front wall panel 3000, a rear floor framework 6000, and a left-right rear wheel cover.

Referring to FIG. 1 and FIG. 2, the left-right side wall inner panel includes a left side wall inner panel 4000L and a right side wall inner panel 4000R that are integrally molded through hot stamping of an integral sheet material, where the left side wall inner panel 4000L and the right side wall inner panel 4000R are symmetrically and respectively disposed on two sides. The left-right side wall outer panel reinforcing panel includes a left side wall outer panel reinforcing panel 5000L and a right side wall outer panel reinforcing panel 5000R that are integrally molded through hot stamping of an integral sheet material, where the left side wall outer panel reinforcing panel 5000L and the right side wall outer panel reinforcing panel 5000R are symmetrically and respectively disposed on two sides, the left side wall outer panel reinforcing panel 5000L is disposed on an outer side of the left side wall inner panel 4000L, and the right side wall outer panel reinforcing panel 5000R is disposed on an outer side of the right side wall inner panel 4000R. The engine compartment framework 1000 is disposed between the left side wall inner panel 4000L and the right side wall inner panel 4000R, and is located in a front section of the left-right side wall inner panel, where the engine compartment framework 1000 includes a left front longitudinal beam section 1002 of the engine compartment framework, a right front longitudinal beam section 1003 of the engine compartment framework, and a rear section 1001 of the engine compartment framework that are combined and integrally molded through hot stamping of an integral sheet material. The left-right front wheel cover includes a left front wheel cover 2000L and a right front wheel cover 2000R that are integrally molded through hot stamping of an integral sheet material, where the left front wheel cover 2000L and the right front wheel cover 2000R are respectively disposed on two sides of the engine compartment framework 1000. The front wall panel 3000 is integrally molded through hot stamping of an integral sheet material, is disposed in the rear section 1001 of the engine compartment framework, and is located between the left side wall inner panel 4000L and the right side wall inner panel 4000R. The rear floor framework 6000 is integrally molded through hot stamping of an integral sheet material, is disposed between the left side wall inner panel 4000L and the right side wall inner panel 4000R, and is located in a rear section of the left-right side wall inner panel. The left-right rear wheel cover includes a left rear wheel cover 7000L and a right rear wheel cover 7000R that are integrally molded through hot stamping of an integral sheet material, where the left rear wheel cover 7000L and the right rear wheel cover 7000R are respectively disposed on two sides of the rear floor framework 6000.

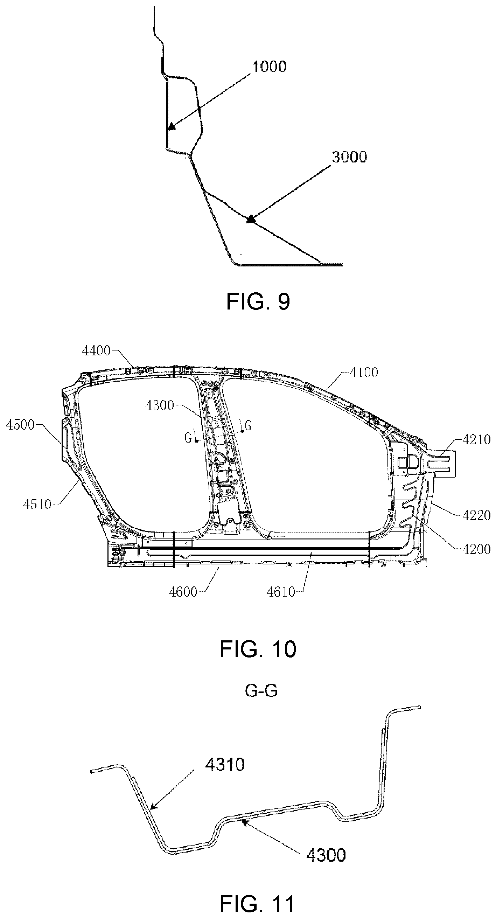

Referring to FIG. 10, in some embodiments, each of the left side wall inner panel 4000L and the right side wall inner panel 4000R is formed through hot stamping of an integrated sheet having two closed door rings; and each of the left side wall inner panel 4000L and the right side wall inner panel 4000R includes: an inner panel A-pillar portion 4200, an inner panel B-pillar portion 4300, an inner panel C-pillar portion 4500, an inner panel doorsill portion 4600, a first inner panel upper side beam portion 4100, and a second inner panel upper side beam portion 4400. The inner panel A-pillar portion 4200 includes an inner panel A-pillar upper end portion and an inner panel A-pillar lower end portion. The inner panel B-pillar portion 4300 includes an inner panel B-pillar upper end portion and an inner panel B-pillar lower end portion. The inner panel C-pillar portion 4500 includes an inner panel C-pillar upper end portion and an inner panel C-pillar lower end portion. The inner panel doorsill portion 4600 is located between the inner panel A-pillar lower end portion and the inner panel C-pillar lower end portion, where the inner panel B-pillar lower end portion is connected to a middle of the inner panel doorsill portion 4600. The first inner panel upper side beam portion 4100 is located between the inner panel B-pillar upper end portion and the inner panel A-pillar upper end portion. The second inner panel upper side beam portion 4400 is located between the inner panel B-pillar upper end portion and the inner panel C-pillar upper end portion. The inner panel A-pillar portion 4200, the first inner panel upper side beam portion 4100, the inner panel B-pillar portion 4300, and the inner panel doorsill portion 4600 form a first inner closed door ring, and the inner panel C-pillar portion 4500, the second inner panel upper side beam portion 4400, the inner panel B-pillar portion 4300, and the inner panel doorsill portion 4600 form a second inner closed door ring. The side wall inner panel integrates the inner panel A-pillar portion 4200 that is conventionally integrated into the engine compartment assembly, and integrates the inner panel doorsill portion 4600 that is conventionally integrated into the rear floor assembly, so that the side wall inner panel forms a closed and stable " "(rectangular-tri-glide)-shaped structure. In addition, the part of the side wall inner panel is highly integrated into a hot-stamped part, thereby greatly reducing a quantity of parts to be developed, and greatly reducing quantities of dies, inspection tools, and fixtures. Further, reduction of production processes effectively improves precision of a side wall welding assembly, reduces production costs, implements lightweight requirements, and improves rigidity and frontal and lateral collision performance of a vehicle body, thereby fully ensuring that a degree of injury of passengers in the vehicle is reduced after the vehicle is passively impacted.

Referring to FIG. 10, in a specific implementation process, a first inner panel reinforcing rib 4210 is disposed at a connection part between the inner panel A-pillar portion 4200 and the front finger beam 5910, and a second inner panel reinforcing rib 4220 in a straight tooth shape is further disposed at the inner panel A-pillar portion 4200. The first inner panel reinforcing rib 4210 transmits a positive force flow upward to the first inner panel upper side beam portion 4100 for force relief. A lower portion of the first inner panel reinforcing rib 4210 transmits a positive force flow downward to the second inner panel reinforcing rib 4220. The second inner panel reinforcing rib 4220 can rapidly disperse the positive force flow and transmit the positive force flow to a rear portion of the vehicle body. A curved third inner panel reinforcing rib 4510 is disposed on a rear end edge of the inner panel C-pillar portion 4500 and extends from top to bottom, and a flange 4520 used to overlap with the rear wheel cover is added to an edge of the third inner panel reinforcing rib 4510. This increases torsion rigidity of the entire vehicle, and improves comfort, maneuverability, and safety of driving. A fourth inner panel reinforcing rib 4610 is disposed on the inner panel doorsill portion 4600, and the fourth inner panel reinforcing rib 4610 is connected to the second inner panel reinforcing rib 4220 through penetration. In addition, as shown in FIG. 11, an inner panel B-pillar patch panel 4310 is disposed in an upper portion of the inner panel B-pillar portion, and the inner panel B-pillar patch panel 4310 is integrally molded with the integrated sheet through hot stamping, thereby effectively enhancing protection for heads of a plurality of passengers.

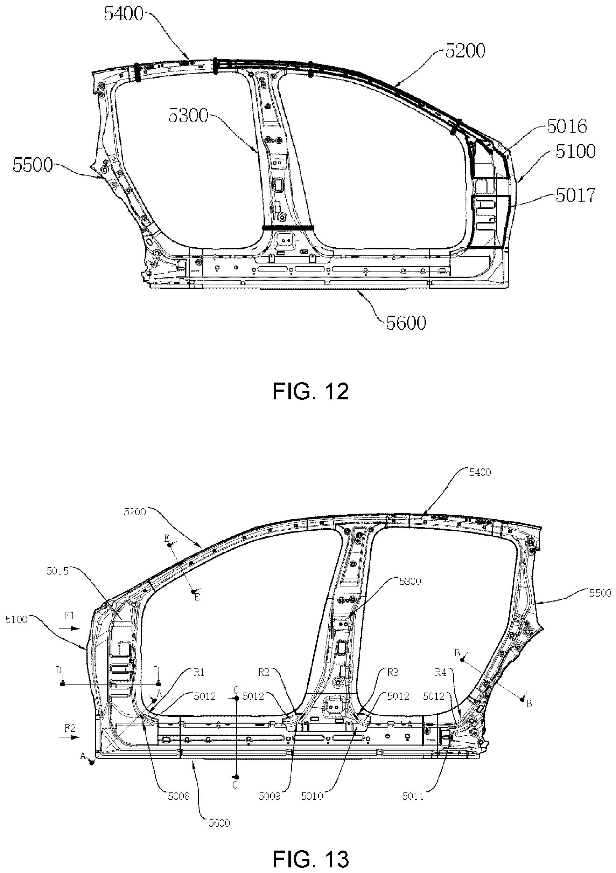

Referring to FIG. 12, FIG. 13, and FIG. 14, in some embodiments, each of the left side wall outer panel reinforcing panel 5000L and the right side wall outer panel reinforcing panel 5000R is formed through hot stamping of an integrated sheet having two closed door rings. Each of the left side wall outer panel reinforcing panel 5000L and the right side wall outer panel reinforcing panel 5000R includes: an outer panel A-pillar portion 5100, an outer panel B-pillar portion 5300, an outer panel C-pillar portion 5500, an outer panel doorsill portion 5600, a first outer panel upper side beam portion 5200, and a second outer panel upper side beam portion 5400. The outer panel A-pillar portion 5100 includes an outer panel A-pillar upper end portion and an outer panel A-pillar lower end portion. The outer panel B-pillar portion 5300 includes an outer panel B-pillar upper end portion and an outer panel B-pillar lower end portion. The outer panel C-pillar portion 5500 includes an outer panel C-pillar upper end portion and an outer panel C-pillar lower end portion. The outer panel doorsill portion 5600 is located between the outer panel A-pillar lower end portion and the outer panel C-pillar lower end portion, where the outer panel B-pillar lower end portion is connected to a middle of the outer panel doorsill portion 5600. The first outer panel upper side beam portion 5200 is located between the outer panel B-pillar upper end portion and the outer panel A-pillar upper end portion. The second outer panel upper side beam portion 5400 is located between the outer panel B-pillar upper end portion and the outer panel C-pillar upper end portion. The outer panel A-pillar portion 5100, the first outer panel upper side beam portion 5200, the outer panel B-pillar portion 5300, and the outer panel doorsill portion 5600 form a first outer closed door ring, that is, a front door ring. The outer panel C-pillar portion 5500, the second outer panel upper side beam portion 5400, the outer panel B-pillar portion 5300, and the outer panel doorsill portion 5600 form a second outer closed door ring, that is, a rear door ring. In this way, a closed and stable rectangular-tri-glide -shaped structure is formed. Nearly 20 conventional parts are integrated into one integrated part, thereby greatly reducing quantities of dies, inspection tools, and fixtures, shortening a process, shortening a length of a dimension chain, accelerating achievement of product precision, shortening a commissioning time, shortening a product development period, reducing investment of human resources, and facilitating quick updating of products. In addition, an integrated continuous C-pillar structure is formed by integrating the second outer closed door ring, thereby effectively improving torsion performance of the entire vehicle and improving driving experience.

Referring to FIG. 12, in some embodiments, each of the left side wall outer panel reinforcing panel 5000L and the right side wall outer panel reinforcing panel 5000R further includes an outer panel A-pillar upper patch panel 5016 and an outer panel A-pillar lower patch panel 5017; the outer panel A-pillar upper patch panel 5016 starts from the outer panel A-pillar upper end portion and extends along the first outer panel upper side beam portion 5200 to the outer panel B-pillar upper end portion, and the outer panel A-pillar upper patch panel 5016 is integrally molded with the integrated sheet through hot stamping; the outer panel A-pillar lower patch panel 5017 is disposed in the outer panel A-pillar portion 5100 and located between the outer panel A-pillar upper end portion and the outer panel A-pillar lower end portion, and the outer panel A-pillar lower patch panel 5017 is integrally molded with the integrated sheet through hot stamping. The disposing positions of the outer panel A-pillar upper patch panel 5016 and the outer panel A-pillar lower patch panel 5017 include but are not limited to the foregoing disposing positions, and may be properly distributed based on collision simulation analysis. In addition, to meet different collision requirements for different positions, a bending-resistant cross section formed by integrally molding the outer panel A-pillar upper patch panel 5016 and the entire first outer panel upper side beam portion 5200 is in a circular arch shape. The outer panel A-pillar upper patch panel 5016 can assist the first outer panel upper side beam in dispersing collision energy to the outer panel B-pillar portion 5300, so as to prevent the first outer panel upper side beam from bending and failing during force transmission. The outer panel A-pillar lower patch panel 5017 can assist the outer panel A-pillar portion 5100 in transmitting and dispersing the energy to the door anti-collision beam 5900 disposed on the door.

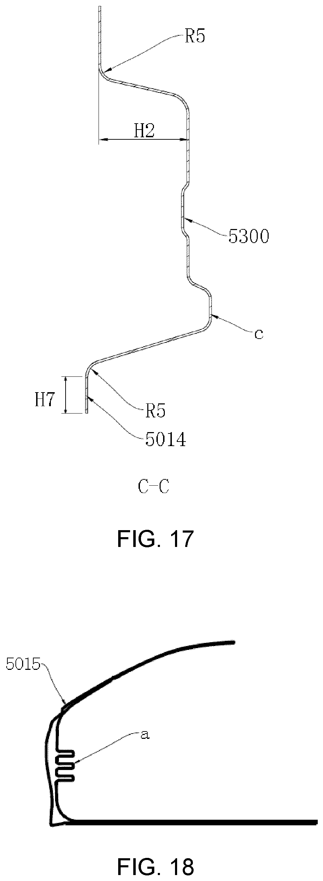

Referring to FIG. 17, in some embodiments, a flange connection surface 5014 is disposed on each of outer edges of the left side wall outer panel reinforcing panel 5000L and the right side wall outer panel reinforcing panel 5000R, and inner edges of the first outer closed door ring and the second outer closed door ring; a flange connection surface 5014 is disposed on each of outer edges of the left side wall inner panel 4000L and the right side wall inner panel 4000R, and inner edges of the first inner closed door ring and the second inner closed door ring; the left side wall outer panel reinforcing panel 5000L is connected to the left side wall inner panel 4000L through the flange connection surface 5014, and the right side wall outer panel reinforcing panel 5000R is connected to the right side wall inner panel through the flange connection surface 5014. A width H7 of the flange connection surface 5014 is 10-25 mm, so as to prevent a problem of unqualified flatness caused by an excessively long flange surface. This effectively improves overall rigidity of the rear door ring and modality of the rear wheel cover, and improves driving experience of the user.

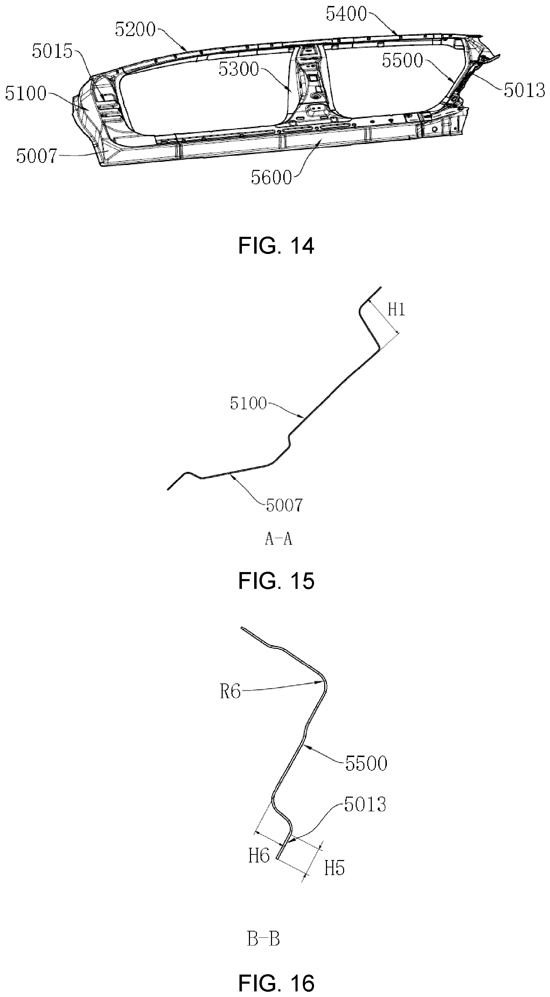

In a specific implementation process, the left-right side wall outer panel reinforcing panel is further designed as follows:
First, after the side wall outer panel reinforcing panel is integrated with two door rings, a size of the part increases, and a stamping depth of the part increases, which usually exceeds a maximum demolding depth of the current hot-stamped device, increasing the molding difficulty. Therefore, the structure of two door rings needs to be adaptively designed. Details are as follows:
Referring to FIG. 14 and FIG. 15, the outer panel A-pillar lower end portion has a tip position, and a crack may occur at the tip position due to excessive material thinning. Therefore, in some embodiments, a tip position at a corner at which the outer panel A-pillar portion 5100 is connected to the outer panel doorsill portion 5600 is processed by using a C-angle to form a smoothly transitioned beveled surface 5007. Therefore, a resistance in forming the sheet material is reduced, bending fluidity of forming the sheet material is improved, and a molding depth of the tip position is reduced, thereby reducing the molding difficulty.

Referring to FIG. 13, profiles at two corner positions of an inner ring lower portion of the front door ring are sharply changed due to a product limitation, leading to high molding difficulty. Therefore, to ensure molding without cracking at the corner of the door opening, in some embodiments, in the first outer closed door ring, a first corner 5008 is formed at a connection part between the outer panel A-pillar portion 5100 and the outer panel doorsill portion 5600, and a second corner 5009 is formed at a connection part between the outer panel B-pillar portion 5300 and the outer panel doorsill portion 5600. An inner round corner radius R1 of the first corner 5008 is greater than or equal to 2.5 times a hot stamping depth H1 at the first corner 5008, and an inner round corner radius R2 of the second corner 5009 is greater than or equal to 2.5 times a hot stamping depth H2 at the second corner 5009.

Referring to FIG. 13, to further meet R1≥2.5H1 and R2≥2.5H2, implementation difficulty is reduced. Therefore, in a specific implementation process, a secondary stepped surface 5012 used to reduce a molding depth is disposed at the first corner 5008, and a secondary stepped surface 5012 used to reduce a molding depth is disposed at the second corner 5009. In addition, disposing of the stepped surface can reduce a molding depth of a corner region, meeting a requirement for a hot stamping depth.

Referring to FIG. 13, profiles at two corner positions of an inner ring lower portion of the rear door ring are sharply changed due to a product limitation, leading to high molding difficulty. Therefore, to ensure molding without cracking at the corner of the door opening, in some embodiments, a third corner 5010 formed at a connection part between the outer panel C-pillar portion 5500 and the outer panel doorsill portion 5600, and a fourth corner 5011 formed at a connection part between the outer panel B-pillar portion 5300 and the outer panel doorsill portion 5600 need to meet the following parameter requirements: An inner round corner radius R3 of the third corner 5010 is greater than or equal to 2.5 times a hot stamping depth H3 at the third corner 5010, and an inner round corner radius R4 of the fourth corner 5011 is greater than or equal to 2.5 times a hot stamping depth H4 at the fourth corner 5011.

Referring to FIG. 13, to further meet R3≥2.5H3 and R4≥2.5H4, implementation difficulty is reduced. Therefore, in a specific implementation process, a secondary stepped surface 5012 used to reduce a molding depth is disposed at the third corner 5010, and a secondary stepped surface 5012 used to reduce a molding depth is disposed at the fourth corner 5011. In addition, disposing of the stepped surface can reduce a molding depth of a corner region, meeting a requirement for a hot stamping depth.

The molding depths of the door opening regions of the front and rear door rings are large. To avoid an excessive resistance of the sheet material during molding, which affects molding performance of the entire door opening, or even causes partial cracking, the round corners of the front and rear door openings should be as large as possible. Therefore, referring to FIG. 17, in some embodiments, a corner radius R5 of a cross section formed by hot stamping of the outer panel doorsill portion 5600 is greater than or equal to 6 mm. Referring to FIG. 16, a corner radius R6 of a cross section formed by hot stamping of the outer panel C-pillar portion 5500 is greater than or equal to 8 mm.

Referring to FIG. 16, in some embodiments, the cross section of the outer panel C-pillar portion 5500 is in a stepped shape with two reverse corners; a flange 4520 connected to the rear wheel cover is disposed on an outer edge of the outer panel C-pillar portion 5500. A width H5 of the flange 4520 is 15-25 mm, so as to ensure that the flange 4520 is not wrinkled during molding of the flange 4520. A size of a lower portion of the outer panel C-pillar portion 5500 is small because the lower portion of the outer panel C-pillar portion 5500 is affected by a shape and tire envelopment. Therefore, a width H6 of the stepped surface of the outer panel C-pillar portion 5500 that is connected to the flange 4520 is greater than or equal to 30 mm, so as to ensure die strength.

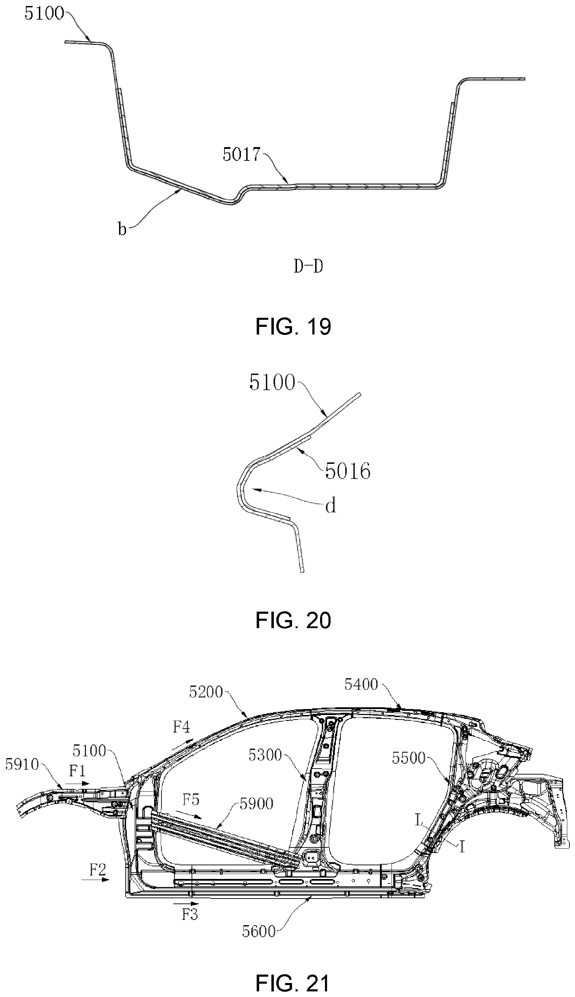

Referring to FIG. 21, next, in an offset collision process, energy is transmitted to the outer panel A-pillar portion 5100 through a first power transmission channel F1 of the front longitudinal beam and a second power transmission channel F2 of the front finger beam 5910. Therefore, to further improve an overall impact resistance capability of a vehicle body structure, the structure of the vehicle body is further designed. Details are as follows:
Referring to FIG. 13 and FIG. 18, in some embodiments, a continuous through rib 5015 is disposed on the outer panel doorsill portion 5600, the outer panel A-pillar portion 5100, and the first outer panel upper side beam portion 5200, so as to improve a bending resistance capability of a cross section. As shown in a in FIG. 18, the through rib 5015 partially forms an "E"-shaped force transmission structure in the outer panel A-pillar portion 5100, and an anti-collision beam may be connected to the "E"-shaped force transmission structure. The "E"-shaped force transmission structure transmits and disperses a part of collision energy of the outer panel A-pillar portion 5100 through the anti-collision beam, so as to reduce force relief pressure in a direction of the outer panel A-pillar upper end portion and the first upper side beam, and force relief pressure in a direction of the outer panel A-pillar lower end portion and the outer panel doorsill portion 5600. In addition, a partial bending-resistant cross section formed by the through rib 5015 in the outer panel A-pillar portion 5100 is in a "n"(channel) shape, as shown in b in FIG. 19. A partial bending-resistant cross section formed by the through rib 5015 in the outer panel doorsill portion 56004 is in a "" shape, as shown in c in FIG. 17. The channel-shaped bending-resistant cross section can effectively improve the overall impact resistance performance of the vehicle body structure and ensure the safety of the driver.

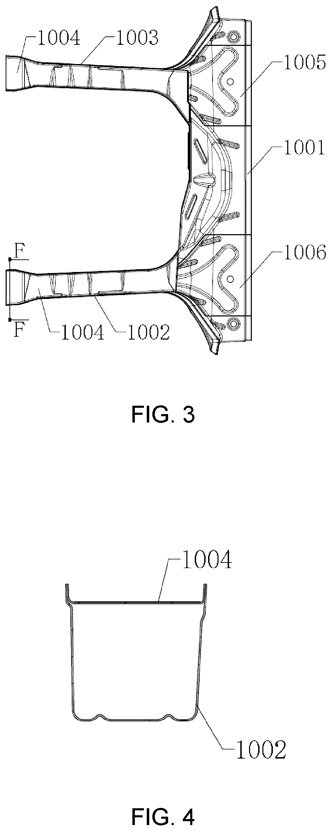

Referring to FIG. 3 and FIG. 4, in some embodiments, each of cross sections of the left front longitudinal beam section 1002 of the engine compartment framework and the right front longitudinal beam section 1003 of the engine compartment framework is of an upwardly open "U"-shaped force transmission structure. A front longitudinal beam sealing panel 1004 is disposed at each of the upward openings of the left front longitudinal beam section 1002 of the engine compartment framework and the right front longitudinal beam section 1003 of the engine compartment framework. Changing the opening of the conventional front longitudinal beam cross section from facing two sides to facing upward facilitates overall hot stamping in the same stamping direction at one single time, and makes the production more convenient as the front longitudinal beam sealing panel 1004 can be disposed along the stamping direction.

Referring to FIG. 3 and FIG. 4, in some embodiments, in some embodiments, the engine compartment framework 1000 further includes a first engine compartment patch panel 1005 and a second engine compartment patch panel 1006, and the first engine compartment patch panel 1005 and the second engine compartment patch panel 1006 are disposed in the rear section 1001 of the engine compartment framework and integrally molded with the integral sheet material through stamping. Three properly-defined zones are obtained, and most of energy is absorbed through an energy-absorbing crumple zone and a bending zone, thereby improving security of a rigid body of a base of a left-right front longitudinal beam section, and protecting safety of passengers.

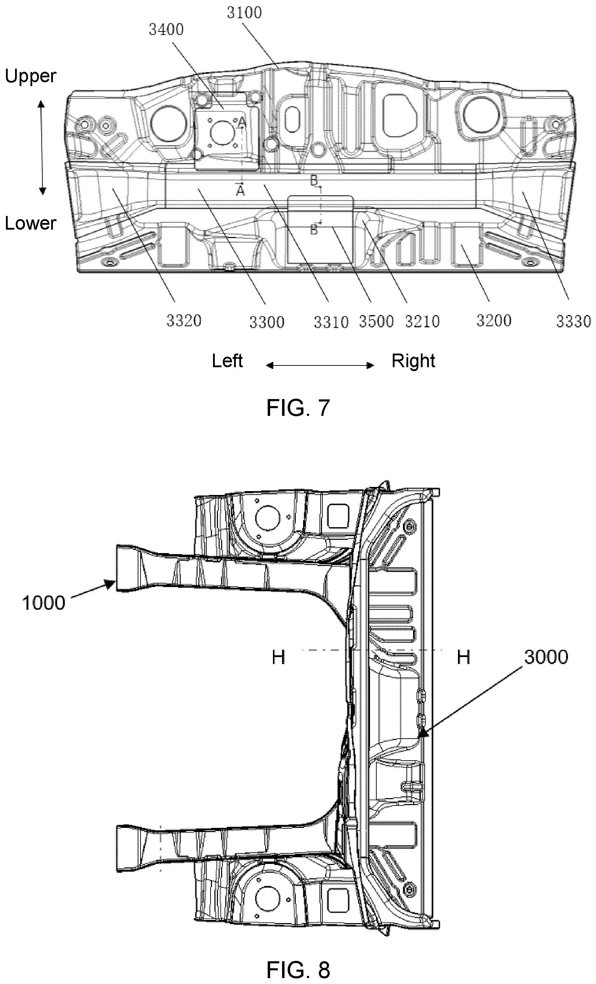

Referring to FIG. 7, in some embodiments, in some embodiments, the front wall panel 3000 includes a front wall panel upper panel portion 3100, a front wall panel lower panel portion 3200, and a reinforcing beam portion 3300 located between the front wall panel upper panel portion 3100 and the front wall panel lower panel portion 3200. The reinforcing beam portion 3300 further includes a front wall panel middle reinforcing beam 3310, a front wall panel left reinforcing beam 3320, and a front wall panel right reinforcing beam 3330. A middle channel reinforcing rib 3210 is disposed in the middle of the front wall panel lower panel portion 3200. As shown in FIG. 8 and FIG. 9, a cavity with a triangular cross section is formed between a footrest position of the front wall panel lower panel portion 3200 and the rear section 1001 of the engine compartment framework. The cavity structure has strong stability, and partially improves rigidity of the footrest position. The cavity structure and the front wall panel middle reinforcing beam 3310 form a front wall double-beam structure. Compared with a conventional single-beam structure, the double-beam structure has stronger transversal stability and a larger moment of inertia for the cross section of the cavity, thereby improving torsion rigidity of the vehicle body-in-white and improving collision performance of the entire vehicle. The double-beam structure is directly formed by welding two hot-stamped parts. Compared with a conventional double-beam structure formed by welding a plurality of parts, the double-beam structure includes less solder joints, thereby avoiding a quality problem caused by a welding failure.

Referring to FIG. 7, in some embodiments, to further enhance strength requirements for different regions of the front wall panel 3000, a first front wall patch panel 3400 and a second front wall patch panel 3500 are further disposed on the front wall panel 3000, the first front wall patch panel 3400 is disposed in a left part of the front wall panel upper panel portion 3100 and overlaps downward with the reinforcing beam portion 3300, the second front wall patch panel 3500 is disposed in a middle of the front wall panel lower panel portion 3200 and overlaps upward with the reinforcing beam portion 3300, and the first front wall patch panel 3400 and the second front wall patch panel 3500 are integrally molded with an integral sheet material of the front wall panel 3000 through hot stamping.

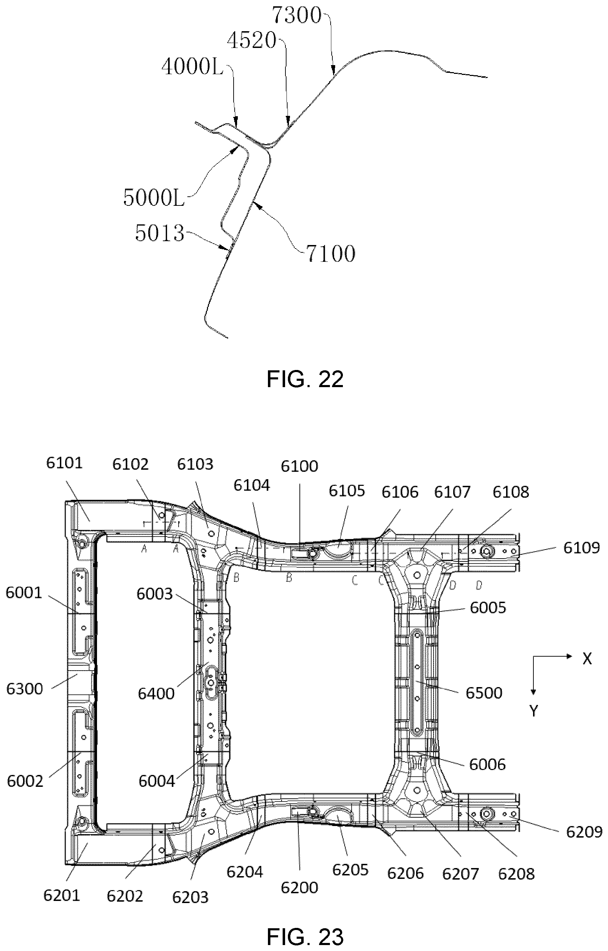

Referring to FIG. 23, in some embodiments, the rear floor framework 6000 includes a left side beam 6100 portion, a right side beam 6200 portion, and a front transverse beam 6300 portion, a middle transverse beam 6400 portion, and a rear transverse beam 6500 portion that are located between the left side beam 6100 portion and the right side beam 6200 portion. The left side beam 6100 portion and the right side beam 6200 portion are symmetrically distributed and each are disposed in a front-rear direction of the vehicle body. The front transverse beam 6300 portion is closed and connected to front ends of the left side beam 6100 portion and the right side beam 6200 portion. The rear transverse beam 6500 portion is disposed close to rear ends of the left side beam 6100 portion and the right side beam 6200 portion. The middle transverse beam 6400 portion is located between the front transverse beam 6300 portion and the rear transverse beam 6500 portion. The front transverse beam 6300 portion, the middle transverse beam 6400 portion, and the rear transverse beam 6500 portion are spaced apart and vertically distributed between the left side beam 6100 portion and the right side beam 6200 portion.

Referring to FIG. 23, in a specific implementation process, material strength and material thicknesses of the left side beam 6100 portion, the right side beam 6200 portion, the front transverse beam 6300 portion, the middle transverse beam 6400 portion, and the rear transverse beam 6500 portion may be flexibly combined based on a strength requirement, so that a quantity of parts and a weight of the vehicle body can be reduced, and strength of the vehicle body can be further improved. The left rear floor side beam and the right rear floor side beam are designed with unequal material thicknesses, and are divided into different sections in a longitudinal direction of the vehicle body based on different strength requirements. The left side beam 6100 includes a left side beam front section 6101, a first left transition region 6102, a middle transverse beam left connection section 6103, a second left transition region 6104, a left side beam middle section 6105, a third left transition region 6106, a rear transverse beam left connection section 6107, a fourth left transition region 6108, and a left side beam rear section 6109. The right side beam 6200 includes a right side beam front section 6201, a first right transition region 6202, a middle transverse beam right connection section 6203, a second right transition region 6204, a right side beam middle section 6205, a third right transition region 6206, a rear transverse beam right connection section 6207, a fourth right transition region 6208, and a right side beam rear section 6209. Each transition region smoothly transitions structural designs with different material thicknesses for the sections before and after the transition region, so that strength performance of the sections before and after the transition region is smoothly transitioned without causing a sudden change in the strength performance, thereby further improving strength performance of the vehicle body. Material thicknesses of the left side beam 6100 and the right side beam 6200 may be flexibly combined based on strength requirements for different sections. In this way, a weight reduction effect is better than those of a patch panel and a welding panel, and performance of a part is better. The rear floor framework 6000 is integrally molded through hot stamping of an integral sheet material that is formed through laser welding, and has ultra-high strength. The design of the integrally molded hot-stamped rear floor framework 6000 does not involve development of tooling such as a stamping die, a single-piece inspection tool, and a welding fixture, reduces a quantity of stamping punches and an amount of welding for subsequent processes, improves production efficiency, dimension precision, and strength of parts, and reduces development costs of parts.

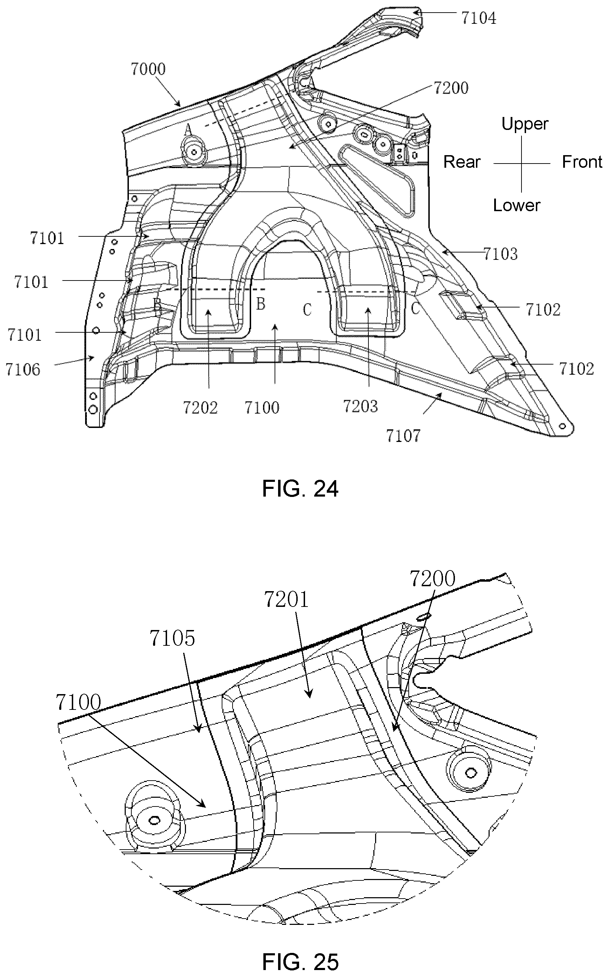

Referring to FIG. 24, in some embodiments, each of the left rear wheel cover 7000L and the right rear wheel cover 7000R includes a rear wheel cover outer panel 7300 and a rear wheel cover inner panel 7100, a first overlap edge 7103 and a second overlap edge 7104 for connection to the left-right side wall inner panel are disposed in a front portion of the rear wheel cover inner panel 7100, a third overlap edge 7105 that overlaps with a D-pillar is disposed on an upper edge of the rear wheel cover inner panel 7100, a fourth overlap edge 7106 that overlaps with the rear wheel cover outer panel is disposed in a rear portion of the rear wheel cover inner panel 7100, and a fifth overlap edge 7107 that overlaps with the rear floor framework 6000 is disposed in a lower portion of the rear wheel cover inner panel 7100. In a specific implementation process, to further enhance strength of the rear wheel cover, a reinforcing rib structure and a patch panel structure may be further properly disposed on the wheel cover inner panel, for example, a rear wheel cover patch panel 7200, a rear wheel cover rear reinforcing rib 7101, and a rear wheel cover front reinforcing rib 7102, as shown in FIG. 24 and FIG. 25. In a specific implementation process, referring to FIG. 21 and FIG. 22, a flange 4520 is correspondingly disposed in each of an outer panel C-pillar portion 5500 of the left-right side wall outer panel reinforcing panel and an inner panel C-pillar portion 4500 of the left-right side wall inner panel, the flange 4520 of the inner panel C-pillar portion 4500 overlaps with the first overlap edge 7103 of the rear wheel cover inner panel 7100 and the rear wheel cover outer panel, the flange 4520 of the outer panel C-pillar portion 5500 overlaps with a panel surface of the rear wheel cover outer panel, and a cavity structure with a closed cross section is formed in the outer panel C-pillar portion 5500 and the inner panel C-pillar portion 4500.

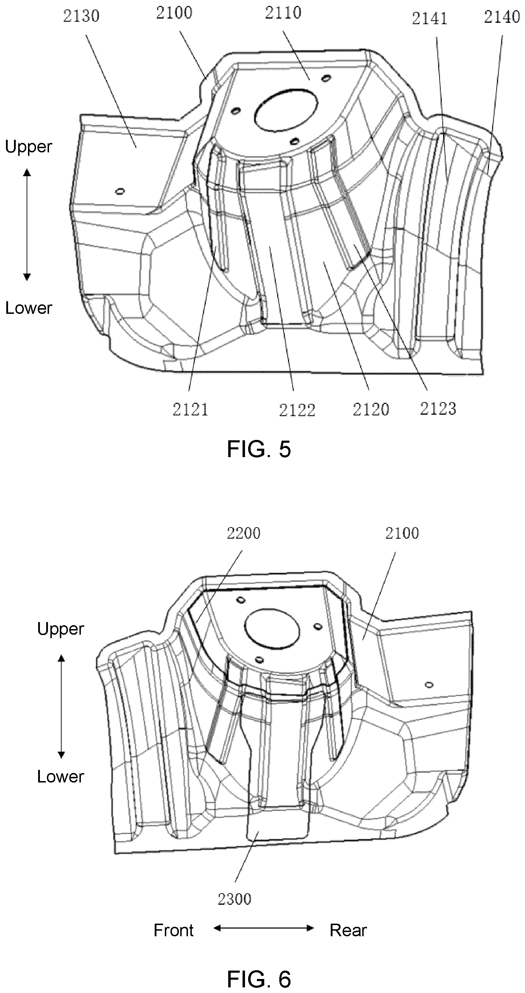

Referring to FIG. 5 and FIG. 6, in some embodiments, each of the left front wheel cover 2000L and the right front wheel cover 2000R includes a shock absorber mounting portion 2110, a wheel cover portion 2120, a wheel cover rear reinforcing portion 2130, a wheel cover front reinforcing portion 2140, a first front wheel cover patch panel 2200, and a second front wheel cover patch panel 2300. To further improve partial strength, the first front wheel cover patch panel 2200 is attached to inner sides of the shock absorber mounting portion 2110 and the wheel cover portion 2120, and the second front wheel cover patch panel 2300 is attached to the inner side of the wheel cover portion 2120. In addition, to improve strength of the front wheel cover, a first reinforcing rib 2121, a second reinforcing rib 2122, a third reinforcing rib 2123, and a fourth reinforcing rib 2141 are further disposed.

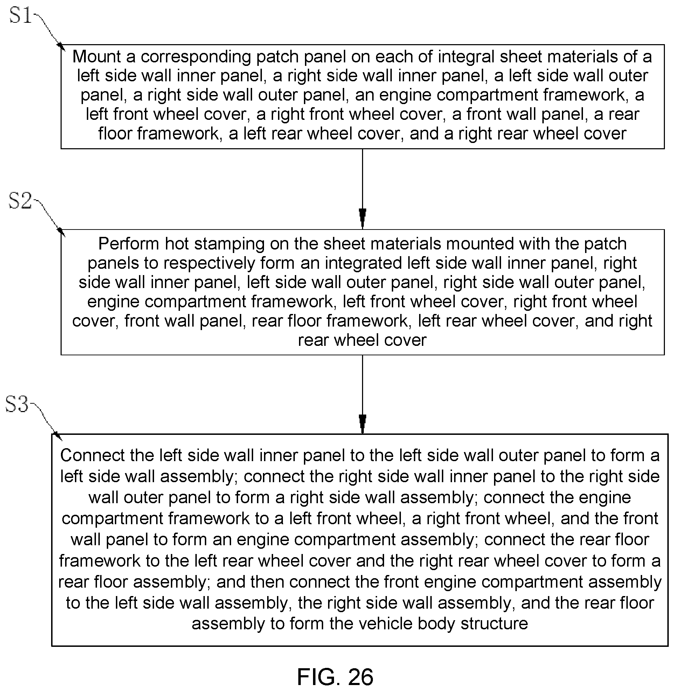

**FIG. 26** is a process flowchart of a manufacturing method for a vehicle body structure according to an example embodiment of the present invention.

This example embodiment further provides a manufacturing method for a vehicle body structure. The method includes the following steps:
S1. Mount a corresponding patch panel on each of integral sheet materials of a left side wall inner panel 4000L, a right side wall inner panel 4000R, a left side wall outer panel reinforcing panel 5000L, a right side wall outer panel reinforcing panel 5000R, an engine compartment framework 1000, a left front wheel cover 2000L, a right front wheel cover 2000R, a front wall panel 3000, a rear floor framework 6000, a left rear wheel cover 7000L, and a right rear wheel cover 7000R.
S2. Perform hot stamping on the sheet materials mounted with the patch panels to respectively form an integrated left side wall inner panel 4000L, right side wall inner panel 4000R, left side wall outer panel reinforcing panel 5000L, right side wall outer panel reinforcing panel 5000R, engine compartment framework 1000, left front wheel cover 2000L, right front wheel cover 2000R, front wall panel 3000, rear floor framework 6000, left rear wheel cover 7000L, and right rear wheel cover 7000R.
S3. Connect the left side wall inner panel 4000L to the left side wall outer panel reinforcing panel 5000L to form a left side wall assembly; connect the right side wall inner panel 4000R to the right side wall outer panel reinforcing panel 5000R to form a right side wall assembly; connect the engine compartment framework 1000 to a left front wheel, a right front wheel, and the front wall panel 3000 to form an engine compartment assembly; connect the rear floor framework 6000 to the left rear wheel cover 7000L and the right rear wheel cover 7000R to form a rear floor assembly; and then connect the front engine compartment assembly to the left side wall assembly, the right side wall assembly, and the rear floor assembly to form the vehicle body structure.

This example embodiment provides a vehicle, including the vehicle body structure according to any one of the foregoing example embodiments.

In general, in this technical solution, layout planning is performed on a vehicle body structure, parts of the vehicle body are re-planned and divided into pieces, and dozens of parts are integrated into one part based on the hot stamping technology. The interior of the integrated hot-stamped part eliminates solder joint connections of the conventional structure, and eliminates welding edges for internal overlapping. Materials of different material brands or thicknesses are connected through laser welding or by using panels of unequal material thicknesses, so as to implement differences in performance requirements for different regions of the vehicle body and maximize the utilization of sheet materials. The internal reinforcing panel structure of the integrated hot-stamped part is changed from the conventional manner of separately molding the reinforcing panel and the body part and then connecting the reinforcing panel and the body part through spot-welding to a manner of spot-welding the reinforcing panel and the body material and then integrally molding the reinforcing panel and the body material through hot stamping to form the patch panel structure. This highly integrated hot-stamped vehicle body structure breaks the conventional thinking, and highly integrates the parts of the engine compartment welding assembly, the rear floor welding assembly, and the left-right side wall welding assembly, including seven major modules: the highly integrated hot-stamped engine compartment framework 1000, the highly integrated hot-stamped front wheel cover, the highly integrated hot-stamped front wall panel 3000, the highly integrated hot-stamped side wall inner panel double-door ring reinforcing panel, the highly integrated hot-stamped side wall outer panel reinforcing panel reinforcing ring, the highly integrated hot-stamped rear wheel cover inner panel 7100, and the highly integrated hot-stamped rear floor framework 6000.

Specifically, for the front engine compartment welding assembly in the conventional vehicle body structure, each subassembly generally includes 110-180 individual parts due to differences in vehicle models. In this technical solution, the engine compartment assembly may be formed by welding an integrally molded hot-stamped engine compartment framework 1000, a left-right front wheel cover, a front wall panel 3000, and 5-8 conventional sheet metals, with the total quantity of parts being not more than 40.

For the left-right side wall welding assembly in the conventional vehicle body structure, each subassembly generally includes 150-200 individual parts due to differences in vehicle models. In this technical solution, the left-right side wall assembly includes a left-right side wall inner panel, a left-right side wall outer panel reinforcing panel, and a rear wheel cover inner panel 7100, with the total quantity of parts being not more than 50.

For the rear floor welding assembly in the conventional vehicle body structure, each subassembly generally includes 100-150 individual parts due to differences in vehicle models. In this technical solution, the rear floor welding assembly includes an integrally molded hot-stamped rear floor framework 6000 and a rear floor panel, with the total quantity of parts being not more than 30.

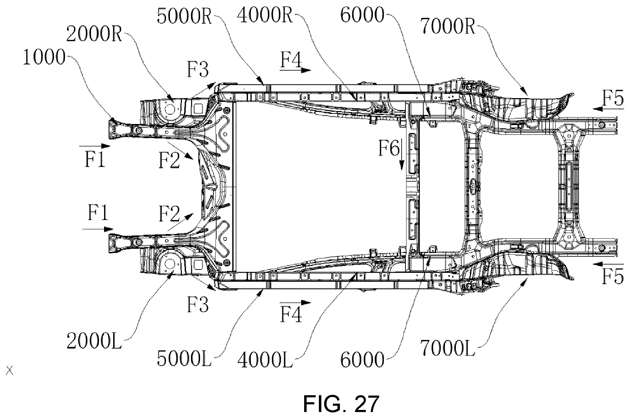

In addition, with reference to FIG. 27, a collision force transmission path is optimized. According to a first aspect, a collision force transmission path F1/F2/F3 mainly includes an integrated hot-stamped engine compartment framework 1000; a collision force transmission path F4 is mainly formed by welding an integrated hot-stamped side wall outer panel reinforcing panel and a side wall inner panel; a collision force transmission path F5/F6 mainly includes an integrated hot-stamped rear floor framework 6000. This avoids a matching quality problem caused by a part size error, avoids collision performance difference caused by a status consistency difference of a plurality of parts, and reduces a quantity of solder joints, thereby reducing a probability of solder joint failure, and further improving collision stability and improving overall vehicle safety.

The foregoing embodiments merely illustrate principles and effects of the present invention, but are not intended to limit the present invention. Any person skilled in the art may modify or alter the foregoing embodiments without departing from the essence and scope of the present invention. Therefore, all equivalent modifications or alterations completed by a person of ordinary skill in the art without departing from the essence and technical ideas disclosed in the present invention should still be covered by the claims of the present invention.

## Claims

1. A vehicle body structure, comprising:
a left-right side wall inner panel, comprising a left side wall inner panel (4000L) and a right side wall inner panel (4000R) that are integrally molded through hot stamping of an integral sheet material, wherein the left side wall inner panel and the right side wall inner panel are symmetrically and respectively disposed on two sides;
a left-right side wall outer panel reinforcing panel, comprising a left side wall outer panel reinforcing panel (5000L) and a right side wall outer panel reinforcing panel (5000R) that are integrally molded through hot stamping of an integral sheet material, wherein the left side wall outer panel reinforcing panel and the right side wall outer panel reinforcing panel are symmetrically and respectively disposed on two sides, the left side wall outer panel reinforcing panel is disposed on an outer side of the left side wall inner panel, and the right side wall outer panel reinforcing panel is disposed on an outer side of the right side wall inner panel;
an engine compartment framework (1000), disposed between the left side wall inner panel and the right side wall inner panel, and located in a front section of the left-right side wall inner panel, wherein the engine compartment framework comprises a left front longitudinal beam section (1002) of the engine compartment framework, a right front longitudinal beam section (1003) of the engine compartment framework, and a rear section (1001) of the engine compartment framework that are combined and integrally molded through hot stamping of an integral sheet material;
a left-right front wheel cover, comprising a left front wheel cover (2000L) and a right front wheel cover (2000R) that are integrally molded through hot stamping of an integral sheet material, wherein the left front wheel cover and the right front wheel cover are respectively disposed on two sides of the engine compartment framework;
a front wall panel (3000), integrally molded through hot stamping of an integral sheet material, disposed in the rear section of the engine compartment framework, and located between the left side wall inner panel and the right side wall inner panel;
a rear floor framework (6000), wherein the rear floor framework is integrally molded through hot stamping of an integral sheet material, disposed between the left side wall inner panel and the right side wall inner panel, and located in a rear section of the left-right side wall inner panel; and
a left-right rear wheel cover, comprising a left rear wheel cover (7000L) and a right rear wheel cover (7000R) that are integrally molded through hot stamping of an integral sheet material, wherein the left rear wheel cover and the right rear wheel cover are respectively disposed on two sides of the rear floor framework.

2. The vehicle body structure according to claim 1, wherein each of the left side wall inner panel and the right side wall inner panel is formed through hot stamping of an integrated sheet having two closed door rings; and each of the left side wall inner panel and the right side wall inner panel comprises:
an inner panel A-pillar portion, comprising an inner panel A-pillar upper end portion and an inner panel A-pillar lower end portion;
an inner panel B-pillar portion, comprising an inner panel B-pillar upper end portion and an inner panel B-pillar lower end portion;
an inner panel C-pillar portion, comprising an inner panel C-pillar upper end portion and an inner panel C-pillar lower end portion;
an inner panel doorsill portion, located between the inner panel A-pillar lower end portion and the inner panel C-pillar lower end portion, wherein the inner panel B-pillar lower end portion is connected to a middle of the inner panel doorsill portion;
a first inner panel upper side beam portion, located between the inner panel B-pillar upper end portion and the inner panel A-pillar upper end portion; and
a second inner panel upper side beam portion, located between the inner panel B-pillar upper end portion and the inner panel C-pillar upper end portion, wherein
the inner panel A-pillar portion, the first inner panel upper side beam portion, the inner panel B-pillar portion, and the inner panel doorsill portion form a first inner closed door ring, and the inner panel C-pillar portion, the second inner panel upper side beam portion, the inner panel B-pillar portion, and the inner panel doorsill portion form a second inner closed door ring.

3. The vehicle body structure according to claim 2, wherein an inner panel B-pillar patch panel is disposed in an upper portion of the inner panel B-pillar portion, and the inner panel B-pillar patch panel is integrally molded with the integrated sheet through hot stamping.

4. The vehicle body structure according to claim 2 or 3, wherein each of the left side wall outer panel reinforcing panel and the right side wall outer panel reinforcing panel is formed through hot stamping of an integrated sheet having two closed door rings; and each of the left side wall outer panel reinforcing panel and the right side wall outer panel reinforcing panel comprises:
an outer panel A-pillar portion, comprising an outer panel A-pillar upper end portion and an outer panel A-pillar lower end portion;
an outer panel B-pillar portion, comprising an outer panel B-pillar upper end portion and an outer panel B-pillar lower end portion;
an outer panel C-pillar portion, comprising an outer panel C-pillar upper end portion and an outer panel C-pillar lower end portion;
an outer panel doorsill portion, located between the outer panel A-pillar lower end portion and the outer panel C-pillar lower end portion, wherein the outer panel B-pillar lower end portion is connected to a middle of the outer panel doorsill portion;
a first outer panel upper side beam portion, located between the outer panel B-pillar upper end portion and the outer panel A-pillar upper end portion; and
a second outer panel upper side beam portion, located between the outer panel B-pillar upper end portion and the outer panel C-pillar upper end portion, wherein
the outer panel A-pillar portion, the first outer panel upper side beam portion, the outer panel B-pillar portion, and the outer panel doorsill portion form a first outer closed door ring, and the outer panel C-pillar portion, the second outer panel upper side beam portion, the outer panel B-pillar portion, and the outer panel doorsill portion form a second outer closed door ring.

5. The vehicle body structure according to claim 4, wherein each of the left side wall outer panel reinforcing panel and the right side wall outer panel reinforcing panel further comprises an outer panel A-pillar upper patch panel and an outer panel A-pillar lower patch panel; the outer panel A-pillar upper patch panel starts from the outer panel A-pillar upper end portion and extends along the first outer panel upper side beam portion to the outer panel B-pillar upper end portion, and the outer panel A-pillar upper patch panel is integrally molded with the integrated sheet through hot stamping; the outer panel A-pillar lower patch panel is disposed in the outer panel A-pillar portion and located between the outer panel A-pillar upper end portion and the outer panel A-pillar lower end portion, and the outer panel A-pillar lower patch panel is integrally molded with the integrated sheet through hot stamping.

6. The vehicle body structure according to claim 1, wherein a flange connection surface is disposed on each of outer edges of the left side wall outer panel reinforcing panel and the right side wall outer panel reinforcing panel, and inner edges of the first outer closed door ring and the second outer closed door ring; a flange connection surface is disposed on each of outer edges of the left side wall inner panel and the right side wall inner panel, and inner edges of the first inner closed door ring and the second inner closed door ring; the left side wall outer panel reinforcing panel is connected to the left side wall inner panel through the flange connection surface, and the right side wall outer panel reinforcing panel is connected to the right side wall inner panel through the flange connection surface.

7. The vehicle body structure according to claim 1, wherein each of cross sections of the left front longitudinal beam section of the engine compartment framework and the right front longitudinal beam section of the engine compartment framework is of an upwardly open channel-shaped force transmission structure.

8. The vehicle body structure according to claim 7, wherein a front longitudinal beam sealing panel is disposed at each of the upward openings of the left front longitudinal beam section of the engine compartment framework and the right front longitudinal beam section of the engine compartment framework.

9. The vehicle body structure according to claim 1, 7, or 8, wherein the engine compartment framework further comprises a first engine compartment patch panel and a second engine compartment patch panel, and the first engine compartment patch panel and the second engine compartment patch panel are disposed in the rear section of the engine compartment framework and integrally molded with the integral sheet material through stamping.

10. The vehicle body structure according to claim 1, wherein the front wall panel comprises a front wall panel upper panel portion, a front wall panel lower panel portion, and a reinforcing beam portion located between the front wall panel upper panel portion and the front wall panel lower panel portion, and a cavity with a triangular cross section is formed between a footrest position of the front wall panel lower panel portion and the rear section of the engine compartment framework.

11. The vehicle body structure according to claim 1 or 10, wherein the front wall panel further comprises a first front wall patch panel and a second front wall patch panel, the first front wall patch panel is disposed in a left part of the front wall panel upper panel portion and overlaps downward with the reinforcing beam portion, the second front wall patch panel is disposed in a middle of the front wall panel lower panel portion and overlaps upward with the reinforcing beam portion, and the first front wall patch panel and the second front wall patch panel are integrally molded with an integral sheet material of the front wall panel through hot stamping.

12. The vehicle body structure according to claim 1, wherein the rear floor framework comprises a left side beam portion, a right side beam portion, and a front transverse beam portion, a middle transverse beam portion, and a rear transverse beam portion that are located between the left side beam portion and the right side beam portion, wherein the front transverse beam portion is closed and connected to front ends of the left side beam portion and the right side beam portion, the rear transverse beam portion is disposed close to rear ends of the left side beam portion and the right side beam portion, and the middle transverse beam portion is located between the front transverse beam portion and the rear transverse beam portion.

13. The vehicle body structure according to claim 4, wherein each of the left rear wheel cover and the right rear wheel cover comprises a rear wheel cover outer panel and a rear wheel cover inner panel, a first overlap edge and a second overlap edge for connection to the left-right side wall inner panel are disposed in a front portion of the rear wheel cover inner panel, a third overlap edge that overlaps with a D-pillar is disposed on an upper edge of the rear wheel cover inner panel, a fourth overlap edge that overlaps with the rear wheel cover outer panel is disposed in a rear portion of the rear wheel cover inner panel, and a fifth overlap edge that overlaps with the rear floor framework is disposed in a lower portion of the rear wheel cover inner panel.

14. The vehicle body structure according to claim 13, wherein a flange is correspondingly disposed in each of an outer panel C-pillar portion of the left-right side wall outer panel reinforcing panel and an inner panel C-pillar portion of the left-right side wall inner panel, the flange of the inner panel C-pillar portion overlaps with the first overlap edge of the rear wheel cover inner panel and the rear wheel cover outer panel, the flange of the outer panel C-pillar portion overlaps with a panel surface of the rear wheel cover outer panel, and a cavity structure with a closed cross section is formed in the outer panel C-pillar portion and the inner panel C-pillar portion.

15. The vehicle body structure according to claim 1, wherein each of the left front wheel cover and the right front wheel cover comprises a shock absorber mounting portion, a wheel cover portion, a wheel cover rear reinforcing portion, a wheel cover front reinforcing portion, a first front wheel cover patch panel, and a second front wheel cover patch panel; the first front wheel cover patch panel is attached to inner sides of the shock absorber mounting portion and the wheel cover portion, and the second front wheel cover patch panel is attached to the inner side of the wheel cover portion.

16. A manufacturing method for a vehicle body structure, comprising the following steps:
S1: mounting a corresponding patch panel on each of integral sheet materials of a left side wall inner panel (4000L), a right side wall inner panel (4000R), a left side wall outer panel reinforcing panel (5000L), a right side wall outer panel reinforcing panel (5000R), an engine compartment framework (1000), a left front wheel cover (2000L), a right front wheel cover(2000R), a front wall panel (3000), a rear floor framework (6000), a left rear wheel cover (7000L), and a right rear wheel cover (7000R);
S2: performing hot stamping on the sheet materials mounted with the patch panels to respectively form an integrated left side wall inner panel, right side wall inner panel, left side wall outer panel reinforcing panel, right side wall outer panel reinforcing panel, engine compartment framework, left front wheel cover, right front wheel cover, front wall panel, rear floor framework, left rear wheel cover, and right rear wheel cover; and
S3: connecting the left side wall inner panel to the left side wall outer panel reinforcing panel to form a left side wall assembly; connecting the right side wall inner panel to the right side wall outer panel reinforcing panel to form a right side wall assembly; connecting the engine compartment framework to a left front wheel, a right front wheel, and the front wall panel to form an engine compartment assembly; connecting the rear floor framework to the left rear wheel cover and the right rear wheel cover to form a rear floor assembly; and then connecting the front engine compartment assembly to the left side wall assembly, the right side wall assembly, and the rear floor assembly to form the vehicle body structure.

17. A vehicle, comprising the vehicle body structure according to any one of claims 1 to 15.
